# EUROPÄISCHE PATENTSCHRIFT

(11) **EP 0 768 191 B1**
(45) Veröffentlichungstag und Bekanntmachung des Hinweises auf die Patenterteilung: **29.09.1999**
(21) Anmeldenummer: 96113371.7
(22) Anmeldetag: 21.08.1996
(51) Int. Cl.: B60B 3/04, B60B 3/10, B60B 1/12

(54) **Rad für ein Kraftfahrzeug**
Wheel for a motor vehicle
Roue pour un véhicule à moteur

(30) Priorität: 11.10.1995 DE 19537839; 19.01.1996 DE 19601778
(43) Veröffentlichungstag der Anmeldung: 16.04.1997
(73) Patentinhaber: Dr.Ing.h.c. F. Porsche Aktiengesellschaft, 70435 Stuttgart (DE)
(72) Erfinder: Stach, Jens, 71735 Eberdingen (DE)

(56) Entgegenhaltungen:
- EP-A- 0 546 307
- EP-A- 0 547 313
- EP-A- 0 552 436
- DE-A- 2 311 740
- DE-C- 4 430 489
- US-A- 4 610 482

## Beschreibung

Die Erfindung bezieht sich auf ein Rad für ein Kraftfahrzeug nach dem Oberbegriff des Anspruchs 1.

Aus der DE 23 11 740 ist ein Fahrzeugrad bekannt, das aus einem verrippten und mit Luftöffnungen versehenen Felgenstern besteht, der innerhalb eines Felgenbettes angeordnet ist und welches beide Felgenhörner aufweist. Der Felgenstern ist mit dem Felgenbett innenseitig mehrfach verschweißt und besteht aus einem Leichtmetallguß, wobei das Felgenbett aus einem Leichtmetallblech hergestellt wird. Desweiteren sind auch Fahrzeugräder aus der US-PS 4,610,482 bekannt, die zweiteilig ausgeführt sind, wobei das Felgenbett innenseitig des Felgensterns im Bereich des Felgenhornes durch eine Schweißung verbunden ist.

Der Erfindung liegt die Aufgabe zugrunde, ein mehrteiliges Fahrzeugrad zu schaffen, das in einfacher Weise herstellbar ist und bei einem geringen Gewicht eine große Festigkeit aufweist und als Konstruktion so ausführbar ist, daß es in einfacher Weise verbindbar ist und verschiedene Verbindungsverfahren angewendet werden können.

Diese Aufgabe wird erfindungsgemäß durch die kennzeichnenden Merkmale des Anspruchs 1 gelöst. Weitere vorteilhafte Merkmale beinhalten die Unteransprüche

Die mit der Erfindung hauptsächlich erzielten Vorteile bestehen darin, daß der Felgenstern und das Felgenbett jeweils aus einem Schalenteil bestehen, die zusammengesteckt miteinander verbindbarsind und sich zwischen den Luftöffnungen der Schalenteile Hohlspeichen bilden. Die Schalenteile können separat voneinander in verschiedenen Verfahren und aus unterschiedlichen Werkstoffen hergestellt werden, so daß entsprechend den Anforderungen an das Rad der Werkstoff und das Herstellungsverfahren sowie das Verbindungsverfahren beispielsweise ein Schweißverfahren frei wählbar ist.

Die Schalenteile sind jeweils mit sich ergänzenden Bereichen ausgeführt, d.h. beim Zusammenstecken der beiden Schalenteile zum Verbinden können diese Bereiche als sogenannte Zentrierungen zueinander wirken. So weist der Felgenstern Luftöffnungen auf, die von einwärts ausgerichteten Begrenzungswandungen gebildet werden, welche im zusammengesteckten Zustand der Schalenteile in Luftöffnungen des Felgenbettes hineinragen und mit den Öffnungsrändern dieser Luftöffnungen verbindbar sind, wobei dies über eine Schweißung oder ein Klebeverfahren erfolgen kann.

Desweiteren sind beim Zusammenstecken der Schalenteile des Felgensterns mit dem Felgenbett zylinderförmigen Aufnahmen des Felgensterns in den topfförmigen Lagerungen des Felgenbettes angeordnet. Ferner ist der Nabenaußenring des Felgensterns auf der Nabenhülse des Felgenbettes gehalten. Im zusammentreffenden äußeren Ringbereich der beiden Schalenteile wird durch die Ringstege an beiden Felgenteilen eine sogenannte durchgehende Humpfläche gebildet.

Die Verbindung der beiden Schalenteile zur Bildung des fertigen Rades erfolgt mittels einer Verbindung durch Schweißen, Kleben oder einem gleichwirkenden Verfahren , vorzugsweise zwischen den beiden Ringstegen, zwischen der Nabenhülse des Felgenbettes und dem Nabenaußenring des Felgensternes. Zusätzlich kann auch noch eine Verbindung zwischen den Begrenzungswandungen der Luftöffnungen im Felgenstern mit den Öffnungsrändern im Felgenbett erfolgen, was meist der Fall ist.

Nach einer ergänzenden Ausführung sind die Nabenringe der Schalenteile des Felgensterns und des Felgenbettes zur Verbindung ineinander gesteckt, so daß eine optimale Zentrierung der beiden Schalenteile zum Verbinden gewährleistet ist. Entweder überdecken sich die Nabenringe vollständig, so daß eine Verbindung, z.B. eine Schweißverbindung an der inneren Abstützfläche des Felgenbettes erfolgt oder aber der Nabeninnenring endet etwa mittig des Nabenaußenringes und die Schweißverbindung liegt dann innerhalb des Nabenaußenringes.

Zur speziellen Gestaltung der Felgenspeichen und des hiervon in Abhängigkeit gebildeten äußeren Ringraumes der Feige, kann die Verbindung zwischen Ringstegen des Felgenbettes und des Felgensterns variabel gestaltet werden, wodurch sich ein freistehender Rand in etwa Z-Form oder in etwa Winkelform ergibt, so daß eine Tiefbettfelge herstellbar ist, die sich durch tiefliegende Felgenspeichen auszeichnet.

Durch die Schalenteile, insbesondere aufgrund der nach einwärts gerichteten Begrenzungswandungen der Luftöffnungen in Verbindung mit den Öffnungsrändern der Luftöffnungen des Felgenbettes, bilden sich zwischen den Luftöffnungen festigkeitserhöhende Hohlspeichen, die jeweils endseitig in konzentrische Ringräume des Rades einmünden und diese zusätzlich noch stabilitätserhöhend wirken. Diese Ringräume bilden sich einerseits zwischen den oberen Begrenzungswandungen der Luftöffnungen und den Ringstegen sowie den unteren Begrenzungswandungen der Luftöffnungen um die Nabenhülse herum.

In den Hohlspeichen können versteifend wirkende radial verlaufende Rippen angeformt sein, die sowohl im Schalenteil des Felgensterns als auch im Schalenteil des Felgenbettes vorgesehen sind. Die in den Hohlspeichen angeordneten Rippen stehen sich vorzugsweise gegenüber und sind als Halbrippen ausgeführt. Vorzugsweise sind sie in der Mittenebene der Hohlspeiche beabstandet zueinander angeordnet. Die Schalenteile sind aus verschiedenen Materialien, beispielsweise aus einer Aluminiumlegierung, einer Magnesiumlegierung oder einer Titanlegierung herstellbar, wobei die einzelnen Schalenteile in den unterschiedlichen Materialien kombinierbar sind. Auch ist eine Herstellungsweise der Schalenteile aus Blech, im Druckgußverfahren oder in einem gußausgewalzten Material möglich. Eine Verbindung der beiden Schalenteile kann durch ein Schweißverfahren, wie eine Schmelzschweißung, Laserschweißung oder eine Elektrodenstrahlschweißung oder durch ein Klebeverfahren durchgeführt werden.

Ein Ausführungsbeispiel der Erfindung ist in der Zeichnung dargestellt und wird im folgenden näher beschrieben.

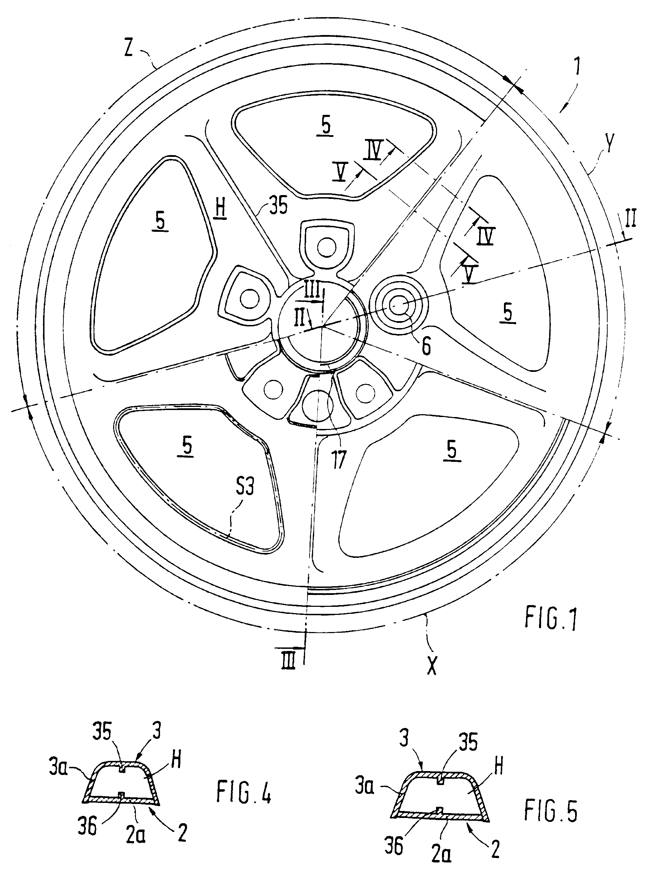

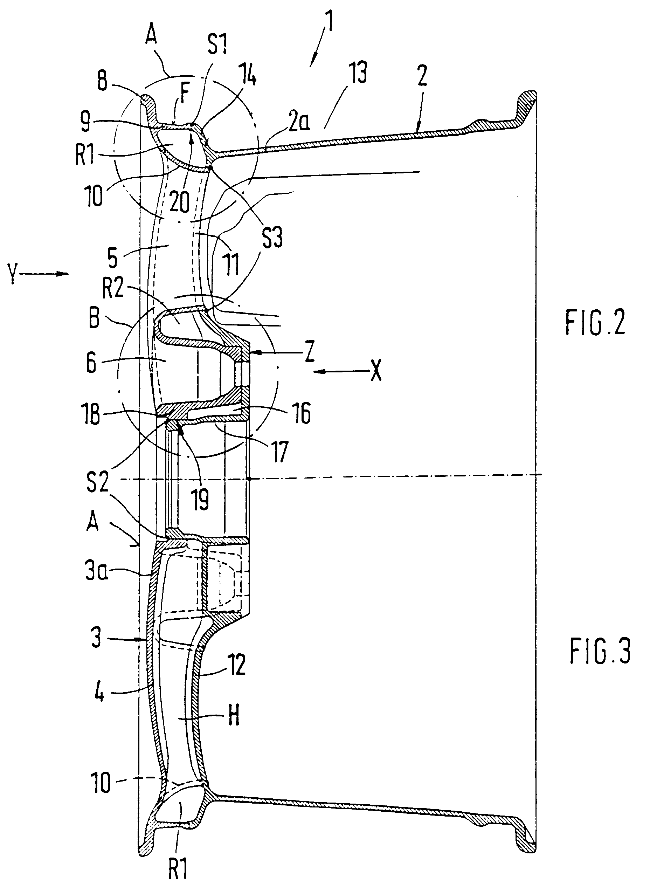

Es zeigen
- Fig. 1: eine Ansicht auf ein aus zwei Schalenteilen zusammengesetztes Fahrzeugrad in den Pfeilrichtungen X, Y und Z der Fig. 2 und 3 gesehen,
- Fig. 2: einen Schnitt nach der Linie II-II der Fig. 1,
- Fig. 3: einen Schnitt nach der Linie III-III der Fig. 1,

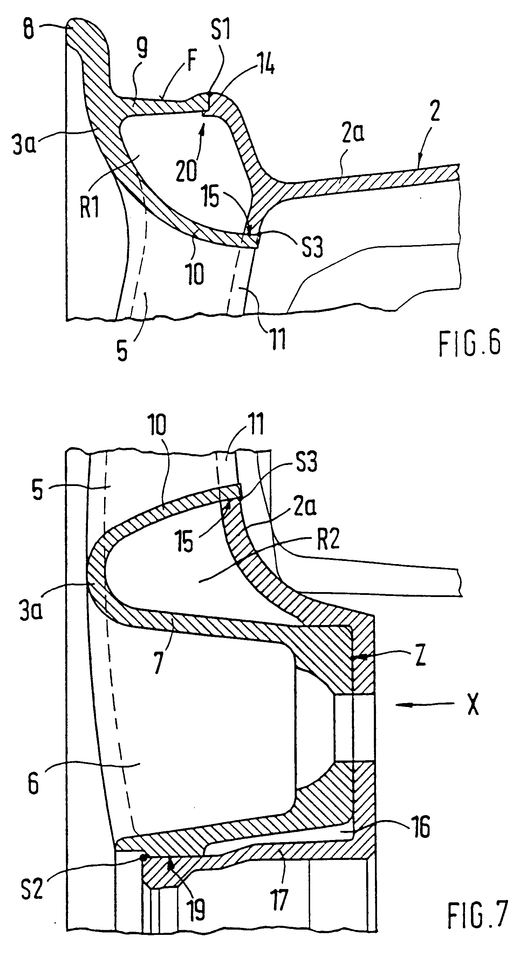

- Fig.4 und 5: Schnitte nach den Linien IV-IV und V-V durch eine Hohlspeiche der zusammengesetzten Schalenteile,
- Fig. 6: eine vergrößerte Darstellung der Einzelheit A gem. Fig. 2,
- Fig. 7: eine vergrößerte Darstellung der Einzelheit B gem. Fig. 2,Fig. 8 einen Schnitt durch die beiden Schalenteile einer weiteren Ausführungsform des Rades, gebildet aus zwei Schalenteilen,
- Fig. 9: eine weitere Auführungsform eines Fahrzeugrades im Schnitt mit teilweise ineinander gesteckten Nabenringen der Schalenteile,
- Fig. 10: eine Ausführung gem. Fig. 9 im Schnitt mit druchgehend ineinander gesteckten Nabenringen der beiden Schalenteile,
- Fig. 11: eine Ausführung gem. Fig. 9 mit einem unterhalb der Felgen-Bettfläche angeordneten äußeren Ringraum und einem Z-förmigen, freistehenden Felgenrand und tiefergelegten Hohlspeichen und
- Fig. 12: eine Ausführung gem. Fig. 9 mit einer an den äußeren Ringraum anschließenden, winkelförmig ausgebildeten freistehenden Felgenrand und tiefergelegten Hohlspeichen.

Das Rad 1 besteht im wesentlichen aus zwei Schalenteilen 2, 3 die das Felgenbett 2a und den Felgenstern 3a darstellen. Diese Schalenteile 2, 3 werden getrennt hergestellt, zusammengesteckt und mittels einer Verbindung, beispielsweise durch Schweißungen oder durch kleben S1, S2 und/oder S3 unlösbar miteinander verbunden.

Der Felgenstern 3a bildet den äußeren Teil des Rades 1 und umfaßt eine Außenwandung 4, in der Luftöffnungen 5 und zylinderförmige Aufnahmen 6 für Radbefestigungsschrauben (nicht gezeigt) vorgesehen sind, die um einen Nabenhülse 17 herum angeordnet werden.

Der äußere Rand des Felgensterns 3a wird von einem Felgenhorn 8 gebildet, an den sich ein ins Feigeninnere erstreckender Ringsteg 9 anschließt, der Teil einer Humpfläche F ist.

Die Luftöffnungen 5 im Felgenstern 3a weisen zur Bildung von Luftkanälen nach einwärts gebogene Begrenzungswandungen 10 auf, die in benachbarten Luftöffnungen 11 des Felgenbettes 2a hineinragen. Diese Begrenzungswandungen 10 bilden zwischen den Luftöffnungen 5 und 11 Hohlspeichen H, die endseitig in konzentrische Ringräume R1 und R2 des Rades 1 einmünden.

Das Felgenbett 2a wird aus einer innenwandung 12 mit einem etwa winkelig zu dieser Wand verlaufenden vertieften abgesetzten Bett 13 gebildet. An dieses schließt sich über eine hochgestellte Anformung ein stirnseitiger Ringsteg 14 an, der dem Ringsteg 9 des Felgensterns 3a zur Verbindung gegenübersteht. In der Innenwand 12 sind die Luftöffnungen 5 vorgesehen, welche in der Innenwand liegende oder aufgestellte Öffnungsränder 15 aufweisen. Anschließend an die Luftöffnungen 11 in Richtung Radzentrum sind zylindrische Aufnahmen 6 des Felgensterns 3a korrespondierend mit topfförmigen Lagerungen 16 in der Innenwand 12 angeordnet. Im zusammengesteckten Zustand der Schalenteile 2, 3 ist eine Nabenhülse 17 des Felgenbettes 2a in einem Nabenaußenring 18 des Felgensterns 3a angeordnet und in einem Ringbereich 19 mittels einer sogenannten Schiebepassung eingesetzt.

Über sich ergänzenden Bereiche der beiden Schalenteile 2, 3 des Felgenbettes 2a und des Felgensterns 3a, wie den Ringstegen 9, 14, den Begrenzungswandungen 10 mit den Öffnungsrändern 15, den zylindrischen Aufnahmen 6 mit den topfförmigen Lagerungen 16 sowie dem Nabenaußenring 18 mit der Nabenhülse 17, wird eine gewisse Zentrierung bzw. Vorzentrierung der Schalenteile 2, 3 zueinander erreicht, damit anschließend die Verbindungendurchgeführt werden können.

Die Begrenzungswandungen 10 der Luftöffnungen 5 des Felgensterns 3a sind bogenförmig ins Radinnere gerichtet ausgeführt und liegen vorzugsweise innenseitig der Öffnungsränder 15 der Luftöffnungen 11 im Felgenbett 2a an. Es ist auch möglich, daß die Stirnflächen der Begrenzungswandungen 10 von außen gegen Flächen der Innenwand 12 der Luftöffnungen 11 stoßen oder aber die Öffnungsränder 15 nach außen ausgestellt sind und drei Stirnflächen dann den Stirnflächen der Begrenzungswände beispielsweise zur Schweißverbindung gegenüberstehen.

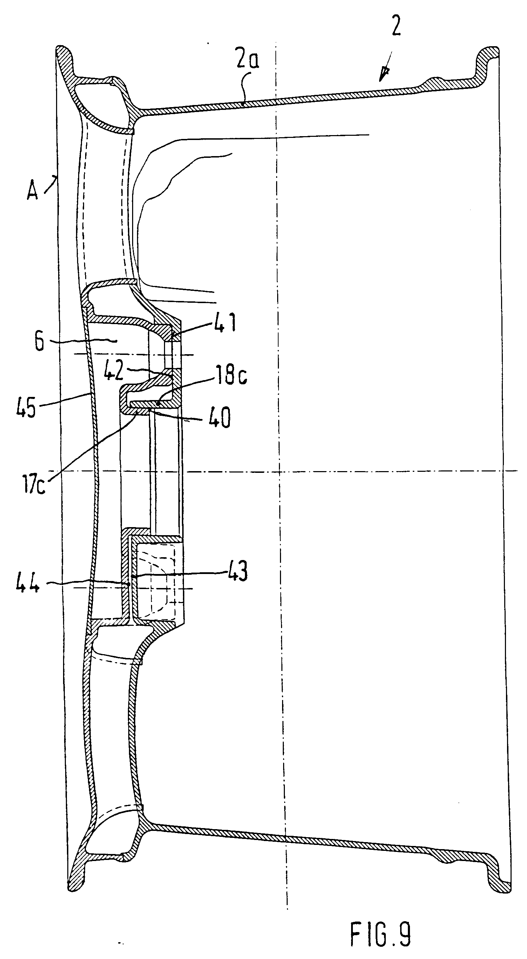

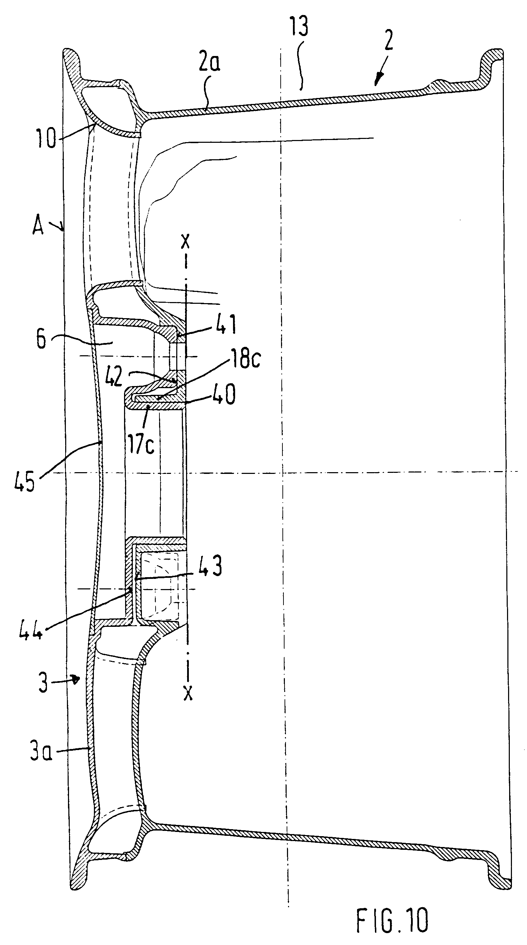

In den Fig. 9 und 10 sind weitere Ausführungen von Rädern 1 dargestellt, deren beiden Schalenteile 2, 3 jeweils Nabenringe 17c, 18c aufweisen. Diese sind zum Verbinden ineinandergesteckt. Gemäß Fig. 9 ist der Nabeninnenring 17c des Schalenteiles 3a in den Nabenaußenring 18c des Schalenteils 2a teilweise eingesteckt, d.h. der Nabeninnenring 17c endet etwa mittig des Nabenaußenringes 18c und die Verbindungsstelle 40 liegt in dem Nabenaußenring 18c.

Gemäß Fig. 10 sind die Nabenringe 17c, 18c überdeckt angeordnet, d.h. der Nabeninnenring 17c ist soweit in den Nabenaußenring 18c eingesteckt, daß die Verbindung 40 in der Abstützebene X-X des Felgenbettes 2 bzw. des Schalenteils 2a liegt.

Die Zentren der beiden Schalenteile 2, 3 stützen sich einerseits auf gegenüberliegenden Flächen 41, 42 im Bereich der Aufnahme 6 für die Radbefestigungsschrauben ab und andererseits an gegenüberstehenden Flächen 43, 44 zwischen diesen Aufnahmen 6. Die Radbefestigungsschrauben sind bzw. das gesamte Zentrum des Rades mit den zylindrischen Aufnahmen 6 ist durch einen Deckel 45 abgeschlossen.

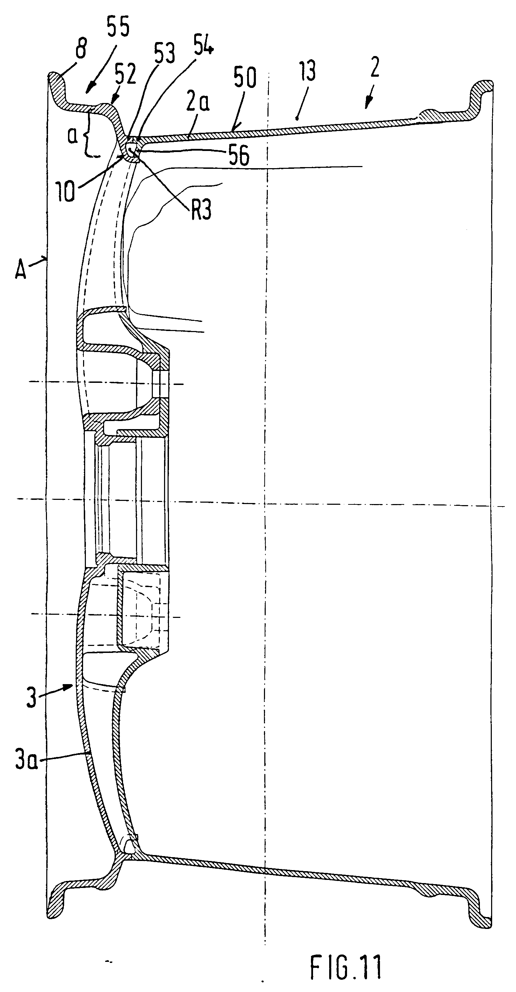

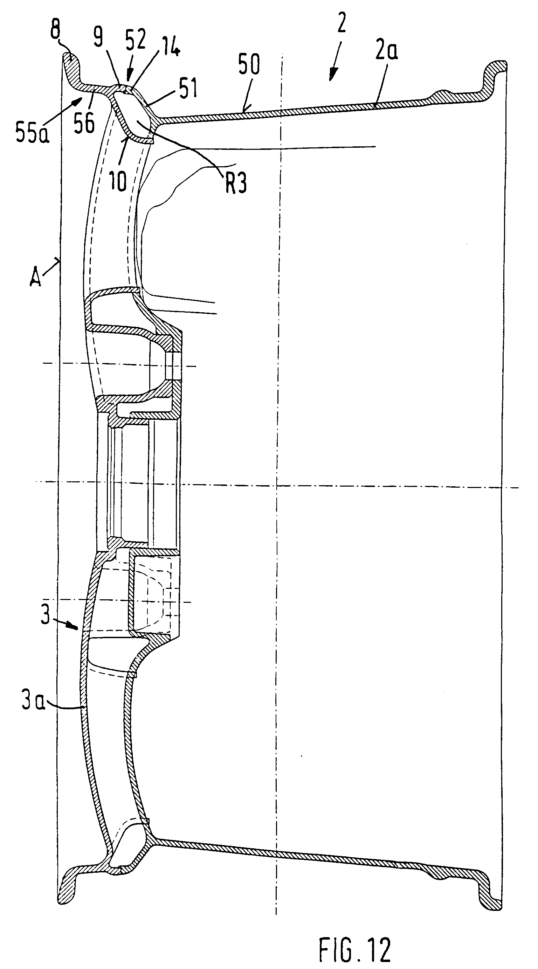

In den Fig. 11 und 12 sind sogenannte Tiefbettfelgen dargestellt, bei denen die Speichen H zur Außenebene A des Rades 1 tiefergelegen sind als bei den Ausführungen gem. den Fig. 9 und 10.

Nach der Ausführung gem. Fig. 11 ist der äußere Ringraum R3 außenseitig von der Begrenzungswand 10 und innenseitig von Ringstegen 53, 54 sowie einer Innenwand 55 der Hohlspeiche H begrenzt. Die Ringstege 53, 54 verlaufen in Verlängerung der Bettfläche 50. Der Ringraum R3 liegt mit dem Maß a beabstandet zum Rand 55 unterhalb der Felgen-Bettfläche 50, so daß sich der freistehende Rand 55 ergibt, welcher Z-förmig gestaltet ist. Der Hump 52 weist keine Verbindungsstelle auf.

In Fig. 12 ist der entsprechende freistehende Rand 55a etwa winkelförmig gestaltet, wobei der Ringraum R3 sich an einem Schenkel 56 des Randes 55a anschließt.

Nach dem Zusammenstecken der beiden Schalenteile 2, 3 werden diese beispielsweise über die Schweißungen S1, S2, S3 miteinander verbunden. Die Schweißung S1 erfolgt zwischen den beiden Ringstegen 9 und 14. Zum besseren Ausrichten zueinander kann einer der Ringstege 9 oder 14 eine winkelförmige Aufnahme 20 aufweisen. Im dargestellten Beispiel weist der Ringsteg 14 diese winkelförmige Aufnahme 20 auf. Eine weitere Schweißung S2 erfolgt zwischen der Nabenhülse 17 und dem Nabenaußenring 18 im Ringbereich 19. Desweiteren ist eine Schweißung S3 zwischen den Begrenzungswandungen 10 der Luftöffnungen 5 und den Öffnungsrändern 15 der Luftöffnungen 11 im Felgenbett vorgesehen. Diese Schweißungen S3 können alternativ zu den anderen Schweißungen S1 und S2 durchgeführt werden.

Durch die Schweißverbindung S3 der beiden Schalenteile 2 und 3 im Bereich der Luftöffnungen 5 und 11 ergeben sich geschlossene Hohlspeichen H, welchen jeweils zwischen benachbarten Luftöffnungen verlaufen und die endseitig in die Ringräume R1 und R2 einmünden. Es ergibt sich hierdurch ein Hohlspeichenrad, gebildet aus zwei zusammengesetzten Schalenkörpern 2, 3, wobei die Wölbung der Hohlspeichen H unabhängig wählbar ist. Innerhalb der Hohlspeichen können radial verlaufende Rippen 35, 36 angeordnet sein, die vorzugsweise in der Mittenebene der Hohlspeichen angeordnet werden, sich gegenüberstehen und zwischen sich vorzugsweise einen Freiraum aufweisen. Auch ein direktes aneinanderliegen der Rippenstirnflächen ist möglich.

Die Schweißungen zum unlösbaren Verbinden der beiden Schalenteile 2 und 3 zur Herstellung des Rades 1 können als Schmelzschweißung, Laserschweißung oder als Elektronenstrahlschweißung durchgeführt werden. Desweiteren ist statt der Schweißung auch eine entsprechende Verklebung der Schalenteile 2, 3 miteinander, beispielsweise über eine Zwei-Komponenten Klebung möglich.

Das Material der Schalenteile 2, 3 kann wahlweise aus einem Blechmaterial, einem im Druckgußverfahren hergestellten Material oder aus gußausgewalztem Material bestehen. Es sind wahlweise Werkstofflegierungen für die Schalenteile aus einer Aluminiumlegierung, einer Magnesiumlegierung oder einer Titanlegierung denkbar.

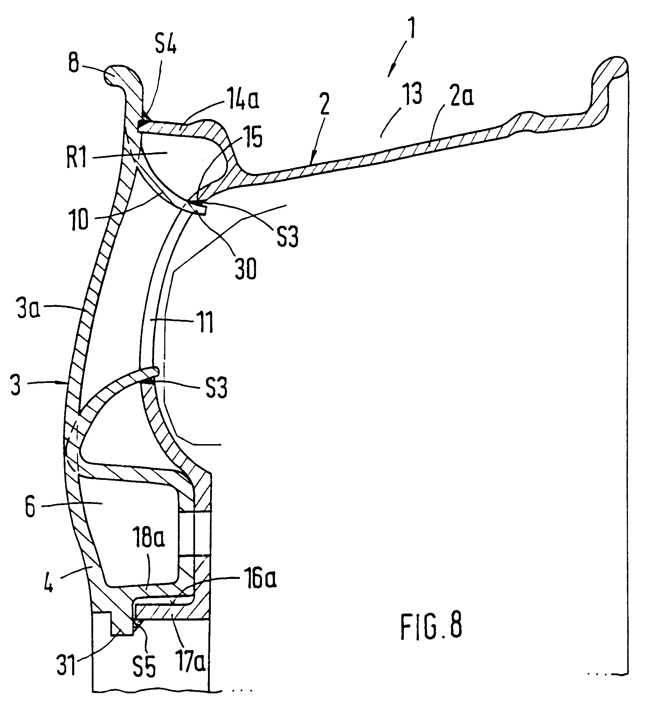

Ein weiteres Ausführungsbeispiel gem. Fig. 8 zeigt die zwei Schalenteile 2, 3 zur Bildung des Felgensterns 3a und des Felgenbettes 2a. Der Ringsteg 14a des Felgenbettes 2a ist bis zur Außenwand 14 des Felgensterns 3a, stumpf anstoßend, ausgeführt. Eine Schweißung S4 oder Klebung erfolgt an der Innenfläche der Außenwand 3. Die Begrenzungswandungen sind durch die Öffnungen 11 überstehend durchgesteckt. Diese überstehenden Enden 30 werden mit den Öffnungsrändern 15 verschweißt. Das Felgenbett 2a weist eine topfförmige Lagerung 16a auf, in der die zylinderförmige Aufnahme 18a angeordnet Ist. Ein Rand der Hülse 17a steht von innen gegen einen Ringbund 31 und ist mit diesem über eine Schweißung S5 oder Klebung verbunden.

Bei einer weiteren Ausführung des Rades 1 können statt der Schweiß- oder Klebverbindung S2 und S3 auch wenigstens eine Schraubverbindung verwendet werden. Die Begrenzungswandungen 10 oder die Öffnungsräder 15 können dann so gestaltet werden, daß eine Schraubverbindung möglich ist. Auch ist im Bereich der Schweißung S2 bzw. S5 eine Schraublösung denkbar.

Ein Verfahren zur Herstellung des Rades erfolgt vorzugsweise in folgenden Schritten:

Die Schalenteile werden in einem ersten Arbeitsgang zu einem Felgenstern mit einem äußeren Ringsteg, Begrenzungswandungen für die Luftöffnungen und zylinderförmigen Aufnahmen für Radbefestigungsschrauben und einem Felgenbett mit einem äußeren Ringsteg, Öffnungsränder wie Luftöffnung und topfförmigen Lagerungen und einer Nabenhülse hergestellt. Anschließend erfolgt dann ein zentriertes Zusammenstecken der beiden Schalenteile über die miteinander sich ergänzenden und korrespondierenden Schalenabschnitte zur Verbindungvorbereitung, wobei die Ränder der Wandungsabschnitte des Felgensterns an den Innenrändern der Luftöffnungen des Felgenbettes anliegen und die Nabenhülse im Nabenaußenring angeordnet ist und die Ringstege des Felgensterns und des Felgenbettes sich mit ihren Stirnflächen unmittelbar gegenüberstehen. Anschließend wird dann an diesen unmittelbar aneinanderliegenden bzw. gegenüberliegenden Bereichen der Schalenteile jeweils eine Schweißung zum Verbinden dieser beiden Schalenteile zur Herstellung eines Rades miteinander durchgeführt. Bei einer Verklebung der Schalenteile miteinander werden die in Berührung stehenden Flächen mit Kleber versehen und verbunden, wobei die mit S1 bis S5 gekennzeichneten Befestigungsarten durch die Klebung ersetzt werden können.

## Patentansprüche

1. Rad für ein Kraftfahrzeug mit einem Luftöffnungen aufweisenden Felgenstern und einem mit diesem verbundenen Felgenbett, dadurch gekennzeichnet, daß das Rad (1) mindestens zwei als Felgenbett (2a) und Felgenstern (3a) ausgebildete Schalenteile (2,3) als ausgeformte Innen- bzw. Aussenwandung (12,4) umfasst, welche durch wenigstens eine Verbindung(S1,S2,S3; 40) miteinander verbunden sind und sich zwischen zusammentreffenden Wandbereichen von benachbarten Luftöffnungen (11, 5) der Schalenteile (2, 3) sich radial verlaufende Hohlspeichen (H) ausbilden, die endseitig in mindestens einen äusserern -und ein innerern Ringraum (R1, R2; R3) einmünden.

2. Rad nach den Ansprüchen 1 oder 2, dadurch gekennzeichnet, daß das den Felgenstern (3a) bildende Schalenteil (3) in der Außenwandung (4) zylinderförmige Aufnahmen (6) für Rad-Befestigungsschrauben und einen Nabenaußenring (18) sowie die Luftöffnungen (5) bildende Begrenzungswandungen (10) und ein Felgenhorn (8) mit einem innenseitig weggeführten Ringsteg (9) aufweist.

3. Rad nach Anspruch 1 oder einem der vorhergehenden Ansprüche, dadurch gekennzeichnet, daß das das Felgenbett (2a) bildende Schalenteil (2) in der Innenwandung (12) eine Nabenhülse (17) und vertiefte, topfförmige Lagerungen (16) für die zylinderförmigen Aufnahmen (6) der Rad-Befestigungsschrauben im Felgenstern (3a) aufweist.

4. Rad nach Anspruch 1 oder einem der vorhergehenden Ansprüche, dadurch gekennzeichnet, daß das Schalenteil (2) des Felgenbettes (2a) am Außenrand einen Ringsteg (14) aufweist, an dem sich das tiefergesetzte Bett (13) des Rades (1) anschließt und bei zusammengesetzten Schalenteilen (2, 3) die Ringstege (9, 14) des Felgensternes (3a) und des Felgenbettes (2a) eine Reifen-Auflagefläche bilden.

5. Rad nach Anspruch 1, dadurch gekennzeichnet, daß die beiden Schalenteile (3 und 2) über sich ergänzende Bereiche des Felgensterns (3a) und des Felgenbettes (2a) zentriert zueinander zusammensteckbar und über mindestens zwei Verbindungen (S1, S2) zwischen den Ringstegen (9 und 14) sowie zwischen der Nabenhülse (17) und dem Nabenaußenring (18) miteinander verbindbar sind.

6. Rad nach Anspruch 1 oder 5, dadurch gekennzeichnet, daß die Begrenzungswandungen (10) der Luftöffnungen (5) und die zylinderförmigen Aufnahmen (6) für die Rad-Befestigungsschrauben die ergänzenden Bereiche im Felgenstern (3a) bilden, welche korrespondierend mit den topfförmigen Lagerungen (16) des Felgenbettes (2a) angeordnet sind, wobei die Begrenzungswandungen (10) teilweise in die Luftöffnungen (11) des Felgenbettes (2a) hineinragen.

7. Rad nach Anspruch 1 oder einem der vorhergehenden Ansprüche, dadurch gekennzeichnet, daß die Begrenzungswandungen (10) der Luftöffnungen (5) des Felgensterns (3a) an den Öffnungsrändern (15) des Felgenbettes (2a) anliegend sind.

8. Rad nach Anspruch 1 oder einem der vorhergehenden Ansprüche, dadurch gekennzeichnet, daß die Begrenzungswandungen (10) der Luftöffnungen (5) im Felgenstern (3a) jeweils aus ins Radinnere weisenden abgebogenen Wandungsabschnitten der Außenwandung (4) bestehen und Luftführungskanäle bilden.

9. Rad nach Anspruch 1 oder einem der vorhergehenden Ansprüche, dadurch gekennzeichnet, daß die Schalenteile (2, 3) des Felgenbettes (2a) und des Felgensterns (3a) im zusammentreffenden Stirnbereich der beiden Ringstege (9, 14) und die Nabenhülse (17) des Felgenbettes (2a) mit dem Nabenaußenring (18) des Felgensterns (3a) miteinander bei (S1 und S2) verbindbar sind.

10. Rad nach Anspruch 1 oder einem der vorhergehenden Ansprüche, dadurch gekennzeichnet, daß die Schalenteile (2, 3) des Felgenbettes (2a) und des Felgensterns (3a) im zusammentreffenden Stirnbereich der beiden Ringstegen (9, 14), in einem Bereich zwischen der Nabenhülse (17) und dem Nabenaußenring (18) und in einem Bereich zwischen den Begrenzungswandungen (10) und den Öffnungsrändern (15) miteinander bei (S1, S2, S3) verbindbar sind.

11. Rad nach Anspruch 1 oder einem der vorhergehenden Ansprüche, dadurch gekennzeichnet, daß am Schalenteil (2) des Felgenbettes (2a) ein durchgehender Ringsteg (14a) vorgesehen ist, der unmittelbar an der Innenfläche der Außenwandung (4) des Felgensterns (3a) zur Verbindung (S4) anliegt.

12. Rad nach Ansprüch 1 oder einem der vorhergehenden Ansprüche, dadurch gekennzeichnet, daß mindestens einer derRingstege (9 oder 14) eine winkelförmige Aufnahme (20) für den anderen Ringsteg (14 oder 9) aufweist.

13. Rad nach Anspruch 1 oder einem der vorhergehenden Ansprüche, dadurch gekennzeichnet, daß die Verbindung(S1) zwischen den beiden Ringstegen (9, 14) etwa in der Ebene der Innenwandung (12) des Felgenbettes (2a) liegt und hierzu der Ringsteg (14) des Felgenbettes (2a) kürzer ausgeführt ist als der Ringsteg (9) des Felgensterns (3a).

14. Rad nach Anspruch 1 oder einem der vorhergehenden Ansprüche, dadurch gekennzeichnet, daß die Begrenzungswandungen (10) durch die Luftöffnungen (11) des Felgenbettes (2a) gesteckt und mittels der Verbindung(S3) am Öffnungsrand (15) jeweils festsetzbarsind.

15. Rad nach Anspruch 1 oder einem der vorhergehenden Ansprüche, dadurch gekennzeichnet, daß der Nabenaußenring (18) des Felgensterns (3a) in der Nabenhülse (17) des Felgenbettes (2a) einerseits und die topfförmigen Lagerungen (16) des Felgenbettes (2a) andererseits in zylinderförmigen Aufnahmen (6) des Felgensterns (3a) eingepaßt gehalten sind und der Boden dieser Aufnahmen (6) am Grund der topfförmigen Lagerungen (16) abgestützt werden.

16. Rad nach Anspruch 1 oder einem der vorhergehenden Ansprüche, dadurch gekennzeichnet, daß die Hohlspeichen (H) zwischen den benachbarten Luftöffnungen (5, 11) aus der Innen- und Außenwand (12, 4) des Felgenbettes (2a) und des Felgensterns (3a) sowie aus Begrenzungswandungen (10) der Luftöffnungen (5) gebildet sind.

17. Rad nach Anspruch 1 oder einem der vorhergehenden Ansprüche, dadurch gekennzeichnet, daß die topfförmigen Lagerungen (16a) des Felgenbettes (2a) einen Nabenring (17a) aufweisen, der mit seiner Stirnfläche gegen einen Nabenring (31) des Felgensterns (3a) anliegt und in diesem Bereich über die Verbindung(S5) gehaltenwird.

18. Rad nach Anspruch 1 oder einem der vorhergehenden Ansprüche, dadurch gekennzeichnet, daß das Schalenteil (3) des Felgensterns (3a) einen zentrischen Nabeninnenring (17c) aufweist, der in einen zentrischen Nabenaußenring (18c) des Schalenteils (2) des Felgenbettes (2a) eingesteckt gehalten wird und sich teilweise in diesen erstreckt und eine gemeinsame Verbindung (40) der beiden Nabenringe (17c und 18c) innenseitig des Nabenaußenrings (18c) erfolgt.

19. Rad nach Anspruch 1 oder einem der vorhergehenden Ansprüche, dadurch gekennzeichnet, daß der Nabeninnenring (17c) durch den Nabenaußenring (18c) bis zur Innenfläche (46) des Schalenteiles (2) des Felgenbettes (2a) bis zu einer Befestigungsebene (X-X) erstreckt und in dieser Ebene die gemeinsame Verbindung (40) erfolgt.

20. Rad nach den Ansprüchen 1, 18 und 19, dadurch gekennzeichnet, daß die Schalenteile (2, 3) des Felgensternes (2a) und des Felgenbettes (3a) gemeinsame Abstützflächen (41, 42) im Bereich der Aufnahmen (6) für die Radbefestigungsschrauben und weitere Abstützflächen (43, 44) zwischen diesen Aufnahmen (6) aufweisen und diese mit den Radbefestigungsschrauben von einem Abschlußdeckel (45) verdeckt angeordnet sind.

21. Rad nach Anspruch 1 oder einem der vorhergehenden Ansprüche, dadurch gekennzeichnet, daß ein äußerer Ringraum (R3) einerseits von der Begrenzungswand (10) des Felgensterns (3a) und andererseits von einer aus einer Felgen-Bettfläche (50) wegragenden Randsteg (51) des Schalenteils (2a) des Felgenbettes (2) gebildet wird und die Verbindungsstelle (S1) der beiden Ringstege (9, 14) im Bereich des Felgen-Humps (52) liegt.

22. Rad nach Anspruch 1 und 21 oder einem der vorhergehenden Ansprüche, dadurch gekennzeichnet, daß der Ringraum (R3) einerseits von der Begrenzungswand (10) des Schalenteils (3) des Felgensterns (3a) und andererseits von beabstandet mit dem Maß (a) zum Hump (52) angeordneten Ringstegen (53, 54), des Felgensterns (3a) und des Felgenbettes (2a), wobei der Ringsteg (54) des Felgenbettes (2) in etwa gerader Verlängerung zur Felgen-Bettfläche (50) verläuft und der Ringraum (R3) unterhalb der Felgen-Bettfläche (50) angeordnet ist.

23. Rad nach Anspruch 1 und 22, dadurch gekennzeichnet, daß die Begrenzungswand (10) in einem vorragenden, freistehenden Rand (55) des Felgensterns (3) einläuft, der etwa Z-förmig gestaltet ist und im Felgenhorn (8) endet.

24. Rad nach Anspruch 1 und 22, dadurch gekennzeichnet, daß die Begrenzungswand (10) in einen freistehenden Rand (55a) des Felgensterns (3) einläuft, der etwa winkelförmig gestaltet ist und im Felgenhorn (8) endet.

25. Rad nach Anspruch 1 oder einem der vorhergehenden Ansprüche, dadurch gekennzeichnet, daß an den Innenflächen der Hohlspeichen (H) der Schalenteile (2, 3) des Rades (1) jeweils radial verlaufende Rippen (35, 36) angeformt sind.

26. Rad nach Anspruch 1 oder einem der vorhergehenden Ansprüche, dadurch gekennzeichnet, daß die jeweils in einer Hohlspeiche (H) angeordneten Rippen (35, 36) in einer Mittenebene angeordnet sind, sich gegenüberstehen und beabstandet zueinander sind.

27. Rad nach Anspruch 1 oder einem der vorhergehenden Ansprüche, dadurch gekennzeichnet, daß für das Rad (1) Blechmaterial, im Druckgußverfahren hergestellte oder gußausgewalzte Schalenteile (2, 3) verwendet werden.

28. Rad nach Anspruch 1 oder einem der vorhergehenden Ansprüche, dadurch gekennzeichnet, daß für die Schalenteile (2, 3) des Rades (1) Werkstofflegierungen aus Aluminium, Magnesium oder Titan verwendet werden.

29. Rad nach Anspruch 1 oder einem der vorhergehenden Ansprüche dadurch gekennzeichnet, daß zum Verbinden der beiden Schalenteile (2, 3) des Rades (1) ein Scheißverfahren, wie ein Schmelz-Schweißverfahren oder ein Laser-Schweißverfahren oder ein Elektronenstrahl-Schweißverfahren verwendet wird.

30. Rad nach Anspruch 1 oder einem der vorhergehenden Ansprüche, dadurch gekennzeichnet, daß die beiden Schalenteile (2, 3) des Rades durch die Verwendung eines Klebemittels miteinander verbunden sind.

31. Rad für ein Kraftfahrzeug mit einem Luftöffnungen aufweisenden Felgenstern und einem mit diesem verbundenen Felgenbett, dadurch gekennzeichnet, daß das Rad (1) mindestens zwei als Felgenbett (2a) und Felgenstern (3a) ausgebildete Schalenteile (2,3) als ausgeformte Innen- bzw. Aussenwandung (12,4) umfasst, welche durch wenigstens eine Schweißung (S1; S4) und wenigstens einer Verschraubung miteinander verbunden sind und sich zwischen zusammentreffenden Wandbereichen von benachbarten Luftöffnungen (11, 5) radial verlaufende Hohlspeichen (H) ausbilden, die endseitig in einen äusserern -und innerern Ringraum (R1, R2; R3, R2) einmünden.

32. Verfahren zur Herstellung eines aus mindestens zwei Schalenteilen bestehenden Rades, wobei das eine Schalenteil den Felgenstern und das weitere Schalenteil das Felgenbett bildet und im Felgenstern Luftöffnungen vorgesehen sind, wobei die Schalenteile in einem ersten Arbeitsgang zu einem Felgenstern mit einem äußeren Ringsteg, Begrenzungswandungen für Luftöffnungen und zylinderförmigen Aufnahmen für Rad-Befestigungsschrauben und einem Felgenbett mit einem äußeren Ringsteg, Öffnungsrändern für Luftöffnungen und topfförmigen Lagerungen und einer Nabenhülse hergestellt werden und anschließend dann ein zentriertes Zusammenstecken über die miteinander korrespondierenden und sich ergänzenden Bereiche zur Verbindungsvorbereitung erfolgt, wobei die Ränder der Wandungsabschnitte im Felgenstern an den Innenrändern der Luftöffnungen des Felgenbettes anliegen, die Nabenhülse im Nabenaußenring angeordnet ist und die Ringstege des Felgensterns und des Felgenbettes sich mit ihren Stirnflächen unmittelbar gegenüberstehen und anschließend dann in diesen unmittelbar aneinanderliegenden Bereichen der beiden Schalenteile jeweils eine Schweißung zum Verbinden dieser Schalenteile miteinander durchgeführt wird.

## Claims

1. A wheel for a motor vehicle with a rim spider provided with air openings and a rim base connected to the said rim spider, **characterized in that** the wheel (1) comprises at least two shell parts (2, 3) constructed in the form of the rim base (2a) and the rim spider (3a) as a respective shaped inner and outer wall (12, 4) connected to each other by at least one connexion (**S1**, **S2**, **S3**; 40), and radially extending hollow spokes (**H**), which open at one end into at least one outer and one inner annular space (**R1**, **R2**; **R3**), are formed between coinciding wall areas of adjacent air openings (11, 5) of the shell parts (2, 3).

2. A wheel according to Claim 1, **characterized in that** the shell part (3) forming the rim spider (3a) is provided in the outer wall (4) with cylindrical receiving means (6) for wheel-fastening bolts and an outer hub ring (18) as well as boundary walls (10) forming the air openings (5) and a rim flange (8) with an annular web (9) extending away on the inside.

3. A wheel according to Claim 1 or one of the preceding Claims, **characterized in that** the shell part (2) forming the rim base (2a) is provided in the inner wall (12) with a hub sleeve (17) and recessed, cup-shaped mountings (16 for the cylindrical receiving means (6) of the wheel-fastening bolts in the rim spider (3a).

4. A wheel according to Claim 1 or one of the preceding Claims, **characterized in that** the shell part (2) of the rim base (2a) is provided on the outer edge with an annular web (14) to which the more deeply recessed base (13) of the wheel (1) is attached, and when the shell parts (2, 3) are assembled the annular webs (9, 14) of the rim spider (3a) and the rim base (2a) form an abutment surface for the tyre.

5. A wheel according to Claim 1, **characterized in that** the two shell parts (3 and 2) can be assembled together in a centred manner by way of supplementary areas of the rim spider (3a) and the rim base (2a) and can be connected to each other by way of at least two connexions (**S1**, **S2**) between the annular webs (9 and 14) as well as between the hub sleeve (17) and the outer hub ring (18).

6. A wheel according to Claim 1 or 5, **characterized in that** the boundary walls (10) of the air openings (5) and the cylindrical receiving means (6) for the wheel-fastening bolts form the supplementary areas in the rim spider (3a), the said supplementary areas being arranged in a manner corresponding to the cup-shaped mountings (16) of the rim base (2a), wherein the boundary walls (10) project in part into the air openings (11) in the rim base (2a).

7. A wheel according to Claim 1 or one of the preceding Claims, **characterized in that** the boundary walls (10) of the air openings (5) in the rim spider (3a) rest against the opening edges (15) of the rim base (2a).

8. A wheel according to Claim 1 or one of the preceding Claims, **characterized in that** the boundary walls (10) of the air openings (5) in the rim spider (3a) each comprise bent portions of the outer wall (4) directed into the interior of the wheel and form air-guiding ducts.

9. A wheel according to Claim 1 or one of the preceding Claims, **characterized in that** the shell parts (2, 3) of the rim base (2a) and of the rim spider (3a) can be connected to each other in the coinciding front region of the two annular webs (9, 14), and the hub sleeve (17) of the rim base (2a) are connectable to the outer hub ring (18) of the rim spider (3a) at (**S1** and **S2**).

10. A wheel according to Claim 1 or one of the preceding Claims, **characterized in that** the shell parts (2, 3) of the rim base (2a) and of the rim spider (3a) are connectable to each other in the coinciding front region of the two annular webs (9, 14) in a region between the hub sleeve (17) and the outer hub ring (18) and in a region between the boundary walls (10) and the opening edges (15) at (**S1**, **S2**, **S3**).

11. A wheel according to Claim 1 or one of the preceding Claims, **characterized in that** a continuous annular web (14a) resting directly against the inner face of the outer wall (4) of the rim spider (3a) for connexion purposes is provided on the shell part (2) of the rim base (2a).

12. A wheel according to Claim 1 or one of the preceding Claims, **characterized in that** at least one of the annular webs (9 or 14) has an angled receiving means (20) for the other annular web (14 or 9).

13. A wheel according to Claim 1 or one of the preceding Claims, **characterized in that** the connexion (**S1**) between the two annular webs (9, 14) is situated substantially in the plane of the inner wall (12) of the rim base (2a), and for this purpose the annular web (14) of the rim base (2a) is shorter than the annular web (9) of the rim spider (3a).

14. A wheel according to Claim 1 or one of the preceding Claims, **characterized in that** the boundary walls (10) are inserted through the air openings (11) of the rim base (2a) and are securable at the respective opening edge (15) by means of the connexion (**S3**).

15. A wheel according to Claim 1 or one of the preceding Claims, **characterized in that** the outer hub ring (18) of the rim spider (3a) is held fitted in the hub sleeve (17) of the rim base (2a) on the one hand and the cup-shaped mountings (16) of the rim base (2a) are held fitted in cylindrical receiving means (6) in the rim spider (3a) on the other hand, and the bottom of the said receiving means (6) is supported on the base of the cup-shaped mountings (16).

16. A wheel according to Claim 1 or one of the preceding Claims, **characterized in that** the hollow spokes (**H**) between the adjacent air openings (5, 11) are formed from the inner and outer wall (12, 4) of the rim base (2a) and the rim, spider (3a) as well as from boundary walls (10) of the air openings (5).

17. A wheel according to Claim 1 or one of the preceding Claims, **characterized in that** the cup-shaped mountings (16) of the rim base (2a) have a hub ring (17a) resting with the end face thereof against a hub ring (31) of the rim spider (3a) and held in this region by way of the connexion (**S5**).

18. A wheel according to Claim 1 or one of the preceding Claims, **characterized in that** the shell part (3) of the rim spider (3a) has a central inner hub ring (17c) held inserted in a central outer hub ring (18c) of the shell part (2) of the rim base (2a) and extends in part therein, and a common connexion (40) of the two hub rings (17c and 18c) is made on the inside of the outer hub ring (18c).

19. A wheel according to Claim 1 or one of the preceding Claims, **characterized in that** the inner hub ring (17c) extends through the outer hub ring (18c) as far as the inner face (46) of the shell part (2) of the rim base (2a) as far as a fastening plane (**X-X**) and the common connexion (40) is made in this plane.

20. A wheel according to Claims 1, 18 and 19, **characterized in that** the shell parts (2, 3) of the rim spider (3a) and of the rim base (2a) are provided with common support faces (41, 42) in the region of the receiving means (6) for the wheel-fastening bolts and further support faces (43, 44) between the said receiving means (6), and the said receiving means (6), together with the wheel-fastening bolts, are arranged covered by a closure lid (45).

21. A wheel according to Claim 1 or one of the preceding Claims, **characterized in that** an outer annular space (**R3**) is formed by the boundary wall (10) of the rim spider (3a) on the one hand and by an edge web (51) - projecting from a face (50) of the rim base - of the shell part (2) of the rim base (2a) on the other hand, and the connexion point (**S1**) of the two annular webs (9, 14) is situated in the region of the rim hump (52).

22. A wheel according to Claim 1 and 21 or one of the preceding Claims, **characterized in that** the annular space (**R3**) is formed by the boundary wall (10) of the shell part (3) of the rim spider (3a) on the one hand and by annular webs (53, 54) - spaced from the hump (52) by the amount (**a**) - of the rim spider (3a) and the rim base (2a) on the other hand, wherein the annular web (54) of the rim base (2a) extends as a substantially straight extension to the face (50) of the rim base and the annular space (**R3**) is situated below the face (50) of the rim base.

23. A wheel according to Claims 1 and 22, **characterized in that** the boundary wall (10) runs into a projecting, free-standing edge (55) of the rim spider (3a) shaped substantially in a Z and terminating in the rim flange (8).

24. A wheel according to Claims 1 and 22, **characterized in that** the boundary wall (10) runs into a free-standing edge (55a) of the rim spider (3a) shaped substantially in an angular manner and terminating in the rim flange (8).

25. A wheel according to Claim 1 or one of the preceding Claims, **characterized in that** radially extending ribs (35, 36) are integrally formed in each case on the inner faces of the hollow spokes (**H**) of the shell parts (2, 3) of the wheel (1).

26. A wheel according to Claim 1 or one of the preceding Claims, **characterized in that** the ribs (35, 36) arranged in a respective hollow spoke (**H**) are arranged in a median plane, are mutually opposed and are spaced from one another.

27. A wheel according to Claim 1 or one of the preceding Claims, **characterized in that** sheet-metal material, shell parts (2, 3) produced in the die-casting process or shell parts (2, 3) rolled from castings is or are used for the wheel (1).

28. A wheel according to Claim 1 or one of the preceding Claims, **characterized in that** material alloys of aluminium, magnesium or titanium are used for the shell parts (2, 3) of the wheel (1).

29. A wheel according to Claim 1 or one of the preceding Claims, **characterized in that** a welding process, such as fusion welding, laser welding or electron-beam welding, is used for joining the two shell parts (2, 3) of the wheel (1).

30. A wheel according to Claim 1 or one of the preceding Claims, **characterized in that** the two shell parts (2, 3) of the wheel are joined together by using an adhesive.

31. A wheel for a motor vehicle with a rim spider provided with air openings and a rim base connected to the said rim spider, **characterized in that** the wheel (1) comprises at least two shell parts (2, 3) constructed in the form of the rim base (2a) and the rim spider (3a) as a respective shaped inner and outer wall (12, 4) connected to each other by at least one weld (**S1**; **S4**) and at least one bolted connexion, and radially extending hollow spokes (**H**), which open at one end into an outer and an inner annular space (**R1**, **R2**; **R3**, **R2**), are formed between coinciding wall areas of adjacent air openings (11, 5).

32. A method of producing a wheel comprising at least two shell parts, wherein one shell part forms the rim spider and the further shell part forms the rim base and air openings are provided in the rim spider, wherein the shell parts are produced in a first operation to form a rim spider with an outer annular web, boundary walls for air openings and cylindrical receiving means for wheel-fastening bolts and a rim base with an outer annular web, edges for air openings and cup-shaped mountings and a hub sleeve, and a centred assembly is then carried out by way of the mutually corresponding and supplementary areas for preparation of the join, wherein the edges of the wall portions in the rim spider rest against the inner edges of the air openings of the rim base, the hub sleeve is arranged in the outer hub ring and the annular webs of the rim spider and of the rim base are directly mutually opposed with the end faces thereof, and in the said directly mutually opposed areas of the two shell parts one respective weld is then made for joining the said shell parts together.

## Revendications

1. Roue pour un véhicule automobile comportant une étoile de jante, présentant des ouvertures d'air ainsi qu'un fond de jante relié à celle-ci, caractérisée en ce que la roue (1) comprend au moins deux parties de coque (2, 3) réalisées sous la forme d'un fond de jante (2a) et d'une étoile de jante (3a) formées respectivement en tant que paroi intérieure (12) et paroi extérieure (4) qui sont reliées entre elles par au moins une liaison (S1, S2, S3 ; 40) et forment, entre des zones de paroi se réunissant d'ouvertures d'air (5) voisines des parties de coque (2, 3), des rayons creux (H) s'étendant radialement, qui débouchent à leur extrémité dans au moins un volume annulaire extérieur et un volume annulaire intérieur (R1, R2 ; R3).

2. Roue selon la revendication 1, caractérisée en ce que la partie de coque (3), formant l'étoile de jante (3a), présente, dans la paroi extérieure (4), des logements (6) cylindriques pour des vis de fixation de roue et un anneau extérieur de moyeu ainsi que des parois de délimitation (10), formant les ouvertures d'air et un rebord de jante (8), avec une cloison annulaire (9) prolongé intérieurement.

3. Roue selon la revendication 1 ou l'une des revendications précédentes, caractérisée en ce que la partie de coque (2), formant le fond de jante (2a), présente, dans la paroi intérieure (12), un manchon de moyeu (17) et des paliers (16) en forme de pot, en creux, pour des logements (6) cylindriques des vis de fixation de roue dans l'étoile de jante (3a).

4. Roue selon la revendication 1 ou l'une des revendications précédentes, caractérisée en ce que la partie de coque (2) du fond de jante (2a) présente, sur le bord extérieur, une cloison annulaire (14) à laquelle se raccorde le fond (13) plus enfoncé de la roue (1) et en ce que, lorsque les parties de coque (2, 3) sont assemblées, les cloisons annulaires (9, 14) de l'étoile de jante (3a) et du fond de jante (2a) forment une surface d'appui de pneu.

5. Roue selon la revendication 1, caractérisée en ce que les deux parties de coque (3 et 2) peuvent être emboîtées, de manière centrée l'une par rapport à l'autre, sur des zones complémentaires de l'étoile de jante (3a) et du fond de jante (2a) et peuvent être reliées entre elles par au moins deux liaisons (S1, S2), entre les cloisons annulaires (9 et 14) ainsi qu'entre le manchon de moyeu (17) et l'anneau extérieur de moyeu (18).

6. Roue selon la revendication 1 ou 5, caractérisée en ce que les parois de délimitation (10) des ouvertures d'air (5) et les logements (6) cylindriques pour les vis de fixation de roue forment les zones complémentaires dans l'étoile de jante (3a), qui sont disposées en correspondance avec les paliers en forme de pot du fond de jante (2a), les parois de délimitation (10) pénétrant partiellement dans les ouvertures d'air (11) du fond de jante (2a).

7. Roue selon la revendication 1 ou l'une des revendications précédentes, caractérisée en ce que les parois de délimitation (10) des ouvertures d'air (5) de l'étoile de jante (3a) s'appliquent contre les bord d'ouverture (15) du fond de jante (2a).

8. Roue selon la revendication 1 ou l'une des revendications précédentes, caractérisée en ce que les parois de délimitation (10) des ouvertures d'air (5) dans l'étoile de jante (3a) sont constituées chacune de portions, recourbées vers l'intérieur de la roue, de la paroi extérieure (4) et forment des canaux de guidage d'air.

9. Roue selon la revendication 1 ou l'une des revendications précédentes, caractérisée en ce que les parties de coque (2, 3) du fond de jante (2a) et de l'étoile de jante (3a) dans la zone frontale de réunion des deux cloisons annulaires (9, 14) et le manchon de moyeu (17) du fond de jante (2a) avec l'anneau extérieur de moyeu (18) de l'étoile de jante (3a) peuvent être reliés entre eux en S1 et S2.

10. Roue selon la revendication 1 ou l'une des revendications précédentes, caractérisée en ce que les parties de coque (2, 3) du fond de jante (2a) et de l'étoile de jante (3a) peuvent être reliées entre elles en S1, S2, S3 dans la zone frontale de réunion des deux cloisons annulaires (9, 14), dans une zone comprise entre le manchon de moyeu (17) et l'anneau extérieur de moyeu (18) et dans une zone comprise entre les parois de délimitation (10) et les bords d'ouverture (15).

11. Roue selon la revendication 1 ou l'une des revendications précédentes, caractérisée en ce que sur la partie de coque (2) du fond de jante (2a) est prévue une cloison annulaire (14a) continue, qui s'applique directement contre la surface intérieure de la paroi extérieure (4) de l'étoile de jante (3a), pour la liaison (S4).

12. Roue selon la revendication 1 ou l'une des revendications précédentes, caractérisée en ce qu'au moins l'une des cloisons annulaires (9 ou 14) présente un logement (20) de forme angulaire pour l'autre cloison annulaire (14 ou 9).

13. Roue selon la revendication 1 ou l'une des revendications précédentes, caractérisée en ce que la liaison (S1) entre les deux cloisons annulaires (9, 14) se situe à peu près dans le plan de la paroi intérieure (12) du fond de jante (2a) et à cet effet la cloison annulaire (14) du fond de jante (2a) est plus courte que la cloison annulaire (9) de l'étoile de jante (3a).

14. Roue selon la revendication 1 ou l'une des revendications précédentes, caractérisée en ce que les parois de délimitation (10) sont emboîtées à travers les ouvertures d'air (11) du fond de jante (2a) et peuvent être fixées chacune sur le bord d'ouverture (15) au moyen de liaisons (S3).

15. Roue selon la revendication 1 ou l'une des revendications précédentes, caractérisée en ce que l'anneau extérieur de moyeu (18) de l'étoile de jante (3a) dans le manchon de moyeu (17) du fond de jante (2a) d'une part et les paliers en forme de pot du fond de jante (2a) d'autre part, sont maintenus ajustés dans des logements (6) cylindriques de l'étoile de jante (3a) et le fond de ces logements (6) est soutenu sur le fond des paliers (16) en forme de pot.

16. Roue selon la revendication 1 ou l'une des revendications précédentes, caractérisée en ce que les rayons creux (H) entre les ouvertures d'air (5, 11) voisines sont formés par la paroi intérieure et la paroi extérieure (12, 14) du fond de jante (2a) et de l'étoile de jante (3a) ainsi que par des parois de délimitation (10) des ouvertures d'air (5).

17. Roue selon la revendication 1 ou l'une des revendications précédentes, caractérisée en ce que les paliers (16a) en forme de pot du fond de jante (2a) présentent un anneau de moyeu (17a), qui s'applique par sa face frontale contre un noyau de moyeu (31) de l'étoile de jante (3a) et qui est maintenu dans cette zone par la liaison (S5).

18. Roue selon la revendication 1 ou l'une des revendications précédentes, caractérisée en ce que la partie de coque (3) de l'étoile de jante (3a) présente un anneau intérieur de moyeu (17c) centré, qui est maintenu enfoncé dans un anneau extérieur de moyeu (18c) centré de la partie de coque (2) du fond de jante (2a) et s'étend partiellement dans celui-ci, et il se produit une liaison (40) commune des deux anneaux de moyeu (17c, 18c) sur le côté intérieur de l'anneau extérieur de moyeu (18c).

19. Roue selon la revendication 1 ou l'une des revendications précédentes, caractérisée en ce que l'anneau intérieur de moyeu (17c) s'étend jusqu'à la surface intérieure (46) de la partie de coque (2) du fond de jante (2a) jusqu'à un plan de fixation (X-X) et dans ce plan se produit la liaison commune (40).

20. Roue selon les revendications 1, 18 et 19, caractérisée en ce que les parties de coque (2, 3) de l'étoile de jante (3a) et du fond de jante (2a) présentent des surfaces d'appui (41, 42) communes dans la région des logements (6) pour les vis de fixation de roue et d'autres surfaces d'appui (43, 44) entre ces logements (6), et ceux-ci avec les vis de fixation de roue sont dissimulés par un couvercle de fermeture (45).

21. Roue selon la revendication 1 ou l'une des revendications précédentes, caractérisée en ce qu'un espace annulaire extérieur (R3) est formé d'une part par la paroi de délimitation (10) de l'étoile de jante (3a) et d'autre part, par une cloison de bordure (51) dépassant d'une surface de fond de jante (50), de la partie de coque (2) du fond de jante (2a), et le point de liaison (S1) des deux cloisons annulaires (9, 14) se situe dans la région du 〈〈 hump 〉〉 de jante (52).

22. Roue selon les revendications 1 et 21 ou l'une des revendications précédentes, caractérisée en ce que l'espace annulaire (R3) est formé d'une part par la paroi de délimitation (10) de la partie de coque (3) de l'étoile de jante (3a) et d'autre part, par des cloisons annulaires (53, 54) disposées espacées, de la distance (a) par rapport au 〈〈 hump 〉〉 (52), de l'étoile de jante (3a) et du fond de jante (2a), la cloison annulaire (54) du fond de jante (2a) s'étendant dans le prolongement à peu près rectiligne de la surface de fond de jante (50) et l'espace annulaire (III) étant disposé au-dessous de la surface de fond de jante (50).

23. Roue selon les revendications 1 et 22, caractérisée en ce que la paroi de délimitation (10) pénètre dans un bord (55) libre et saillant de l'étoile de jante (3), qui a une forme à peu près en Z et qui se termine dans le rebord de jante (8).

24. Roue selon les revendications 1 et 22, caractérisée en ce que la paroi de délimitation (10) pénètre dans un bord (55a) libre de l'étoile de jante (3), qui est de forme à peu près angulaire et qui se termine dans le rebord de jante (8).

25. Roue selon la revendication 1 ou l'une des revendications précédentes, caractérisée en ce que sur les surfaces intérieures des rayons creux (H) des parties de coque (2, 3) de la roue (1) sont formées des nervures (35, 36) s'étendant radialement.

26. Roue selon la revendication 1 ou l'une des revendications précédentes, caractérisée en ce que les nervures (35, 36), disposées chacune dans un rayon creux (H), sont disposées dans un plan médian, se font face et sont espacées les unes des autres.

27. Roue selon la revendication 1 ou l'une des revendications précédentes, caractérisée en ce qu'on utilise pour la roue (1) un matériau de tôle, des parties de coque (2, 3) fabriquées par un procédé de moulage sous pression ou laminées.

28. Roue selon la revendication 1 ou l'une des revendications précédentes, caractérisée en ce que pour les parties de coque (2, 3) de la roue (1) on utilise des alliages d'aluminium, de magnésium ou de titane.

29. Roue selon la revendication 1 ou l'une des revendications précédentes, caractérisée en ce que pour relier les deux parties de coque (2, 3) de la roue (1) on utilise un procédé de soudage, tel qu'un procédé de soudage par fusion ou un procédé de soudage laser ou un procédé de soudage par bombardement électronique.

30. Roue selon la revendication 1 ou l'une des revendications précédentes, caractérisée en ce que les deux parties de coque (2, 3) de la roue sont reliées entre elles par utilisation d'un adhésif.

31. Roue pour un véhicule automobile comportant une étoile de jante présentant des ouvertures d'air et un fond de jante relié à celle-ci, caractérisée en ce que la roue (1) comprend au moins deux parties de coque (2, 3) réalisées sous la forme d'un fond de jante (2a) et d'une étoile de jante (3a) respectivement en tant que paroi intérieure et paroi extérieure (12, 4) qui sont assemblées entre elles par au moins une soudure (S1 ; S4) et au moins un vissage et qui forment entre des zones de paroi, se réunissant, d'ouvertures d'air (11, 5) voisines, des rayons creux (H) s'étendant radialement, qui débouchent à l'extrémité dans un espace annulaire extérieur et intérieur (R1, R2 ; R3, R2).

32. Procédé de fabrication d'une roue constituée d'au moins deux parties de coque, une partie de coque formant l'étoile de jante et l'autre partie de coque, le fond de jante, et dans l'étoile de jante étant prévues des ouvertures d'air, les parties de coques étant fabriquées en une première opération, pour donner une étoile de jante, avec une cloison annulaire extérieure, des parois de délimitation pour des ouvertures d'air et des logements cylindriques pour des vis de fixation de roue et pour donner un fond de jante avec une cloison annulaire extérieure, des bords d'ouverture pour des ouvertures d'air et des paliers en forme de pot ainsi qu'un manchon de moyeu et un emboîtage centré étant réalisés ensuite par les zones correspondant entre elles et se complétant, pour la préparation de l'assemblage, les bords des portions de paroi dans l'étoile de jante s'appliquant contre les bords intérieurs des ouvertures d'air du fond de jante, le manchon de moyeu étant disposé dans l'anneau extérieur de moyeu et les cloisons annulaires de l'étoile de jante et du fond de jante se faisant face directement par leurs surfaces frontales et ensuite une soudure étant réalisée dans ces zones s'appliquant directement l'une contre l'autre des deux parties de coque, pour l'assemblage de ces parties de coque entre elles.
